**Europäisches Patentamt**

**European Patent Office**

**Office européen des brevets**

(19)

(11) Numéro de publication : **0 337 906 B1**

(12) **FASCICULE DE BREVET EUROPEEN**

(45) Date de publication du fascicule du brevet :
**30.09.92 Bulletin 92/40**

(51) Int. Cl.⁵ : **B67B 1/00,** B23Q 7/04,
B23Q 7/16, B65G 47/24,
B23Q 1/16

(21) Numéro de dépôt : **89420136.7**

(22) Date de dépôt : **14.04.89**

(54) **Procédé de positionnement dans une orientation déterminée d'articles allongés hétérogènes et mécanismes destinés à sa mise en oeuvre.**

(30) Priorité : **14.04.88 FR 8805189**

(43) Date de publication de la demande :
**18.10.89 Bulletin 89/42**

(45) Mention de la délivrance du brevet :
**30.09.92 Bulletin 92/40**

(84) Etats contractants désignés :
**AT BE CH DE ES FR GB GR IT LI LU NL SE**

(56) Documents cités :
**WO-A-86/06306**
**FR-A- 1 193 495**
**FR-A- 2 110 857**

(73) Titulaire : "**FRANCOIS VALENTIN**" **Société
dite**
**Zone d'Activités des Forges**
**F-51200 Epernay (FR)**

(72) Inventeur : **Valentin, Jean**
**Beaurepaire Festigny**
**F-51200 Epernay (FR)**
Inventeur : **Suply, Patrick**
**8, rue Jeanne Jugan**
**F-51100 Reims (FR)**
Inventeur : **Anthoine, Huguette**
**11, rue des Forges**
**F-51200 Epernay (FR)**

(74) Mandataire : **Karmin, Roger et al**
**Cabinet MONNIER 150, Cours Lafayette**
**F-69003 Lyon (FR)**

## Description

La présente invention a trait à des perfectionnements apportés aux mécanismes destinés à positionner dans une orientation déterminée des articles allongés hétérogènes dans le sens de leur longueur, c'est-à-dire à centre de gravité situé hors de leur plan transversal de symétrie. Le procédé suivant l'invention et son mécanisme de mise en oeuvre s'appliquent plus particulièrement, bien que non exclusivement, au positionnement de bouchons de champagne avant leur mise en place dans le goulot des bouteilles, car c'est dans ce cas que leur application paraît devoir présenter le plus d'intérêt.

On sait que les bouchons de champagne actuels sont composites et donc composés d'une première partie réalisée au moyen de rondelles de liège collées côte à côte et d'une seconde partie consistant en un cylindre fabriqué au moyen de particules de liège agglomérées. Ainsi, l'une des extrémités des bouchons de ce type est plus légère que l'autre, puisque le cylindre précité réalisé en aggloméré présente une masse volumique beaucoup plus importante que celle des rondelles de liège. Etant donné que les bouchons doivent être engagés dans les bouteilles avec leurs extrémités réalisées en rondelles de liège en premier, il est indispensable que les distributeurs de bouchons assurent une orientation convenable de ces derniers avant l'opération de bouchage.

Les machines prévues pour effectuer ce travail comportent une lame horizontale ou couteau sur lequel le bouchon est centré, de telle sorte qu'une fois qu'il est libéré par ses moyens de maintien, il tombe dans une orientation constante, la partie agglomérée provoquant la chute du bouchon avec son extrémité en rondelle de liège tourné vers le haut.

Les difficultés majeures des machines connues se rencontrent dans le système d'amenée des bouchons au couteau de sélection de leur sens de chute. En effet, le système d'amenée en question est souvent réalisé au moyen d'un tapis roulant qui n'est pas susceptible d'amener convenablement les bouchons avant leur mise en place sur le couteau, de telle sorte qu'un certain nombre d'entre eux doit être éliminé du circuit et ramené dans la trémie de distribution vers ledit tapis. Dans ces conditions, il est impossible d'obtenir des cadences élevées de sélection des bouchons.

Les perfectionnements qui font l'objet de la présente invention visent à remédier aux inconvénients précités et à permettre la réalisation d'un mécanisme de positionnement qui réponde mieux que jusqu'à présent aux divers desiderata de la pratique et qui permette en particulier d'obtenir une cadence de sélection égale à celle des machines à boucher.

A cet effet, le procédé de positionnement suivant l'invention consiste :

– à présenter les articles successivement dans une orientation verticale ;

– à saisir un article par sa paroi latérale entre les deux becs d'une pince dont l'un est un couteau ;

– à centrer l'article par rapport au couteau en desserant légèrement la pince ;

– à faire tourner la pince de manière à amener l'article qu'elle maintient à l'horizontale, le couteau se trouvant en dessous dudit article ;

– et à ouvrir la pince afin que l'article en équilibre instable sur le couteau tombe verticalement dans une orientation déterminée par son balourd.

Le mécanisme pour la mise en oeuvre du procédé ci-dessus comprend :

– une goulotte verticale de stockage des articles ;

– un sélecteur de l'article se trouvant à la base de la goulotte et constituant également chargeur dudit article dans une pince ;

– une tourelle pourvue d'une multiplicité de pinces rotatives dont l'un des becs est un couteau ;

– un dispositif de centrage de l'article par rapport au couteau de chaque pince ;

– des rampes propres à commander les mouvements du bec de chaque pince ;

– une trémie dans laquelle les articles tombent dans l'orientation désirée ;

– et des moyens de commande synchronisée des différents organes du mécanisme.

Le dessin annexé, donné à titre d'exemple, permettra de mieux comprendre l'invention, les caractéristiques qu'elle présente et les avantages qu'elle est susceptible de procurer :

Fig. 1 illustre la structure d'un bouchon qu'on désire positionner par application du procédé et du mécanisme suivant l'invention.

Fig. 2 est une vue par dessus du mécanisme pour la mise en oeuvre du procédé de positionnement suivant l'invention.

Fig. 3 est une vue partielle en perspective d'une des pinces du mécanisme de fig. 2.

Fig. 4 montre, en coupe suivant le plan IV-IV de fig. 2, le sélecteur-chargeur de bouchons dans les pinces du mécanisme.

Fig. 5 illustre la manière dont le bouchon est centré par rapport à la lame ou couteau de chaque pince, suivant le plan de coupe V-V de fig. 2.

Fig. 6 montre le bouchon en équilibre instable sur la lame ou couteau d'une pince avant sa chute dans l'orientation désirée (coupe suivant VI-VI fr fig. 2).

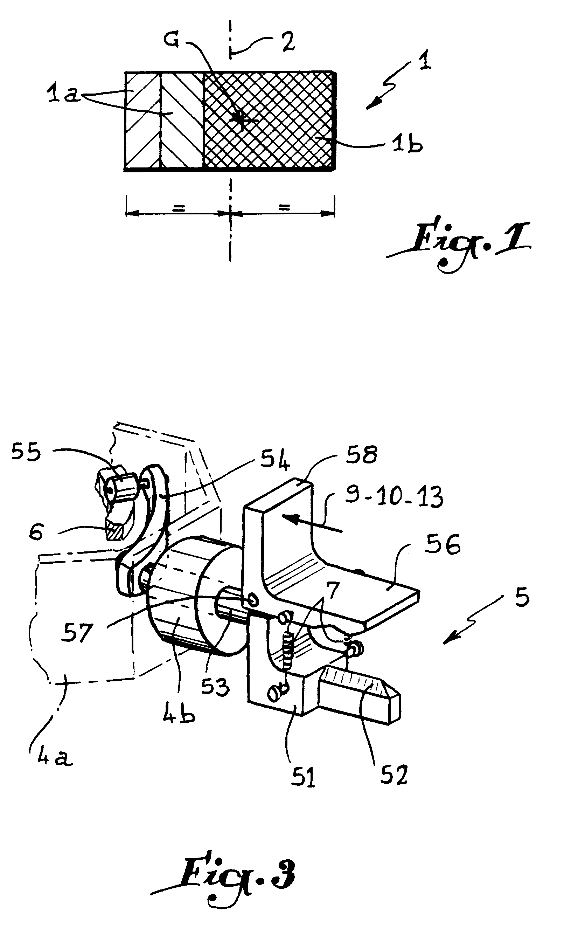

On a illustré en coupe en fig. 1, un bouchon 1 destiné par exemple du bouchage d'une bouteille de champagne et qui est réalisé au moyen de deux rondelles de liège 1a collées entre elles et d'un cyclindre 1b réalisé par compression de particules de liège pour obtenir un aggloméré, ledit cylindre étant collé à la dernière rondelle 1a. On comprend aisément qu'un tel article est hétérogène dans le sens de sa longueur, c'est-à-dire que son centre de gravité se trouve hors du plan transversal de symétrie 2 dudit bouchon. Bien entendu, ce centre de gravité G se trouve dans le cylindre 1b qui constitue ainsi un balourd.

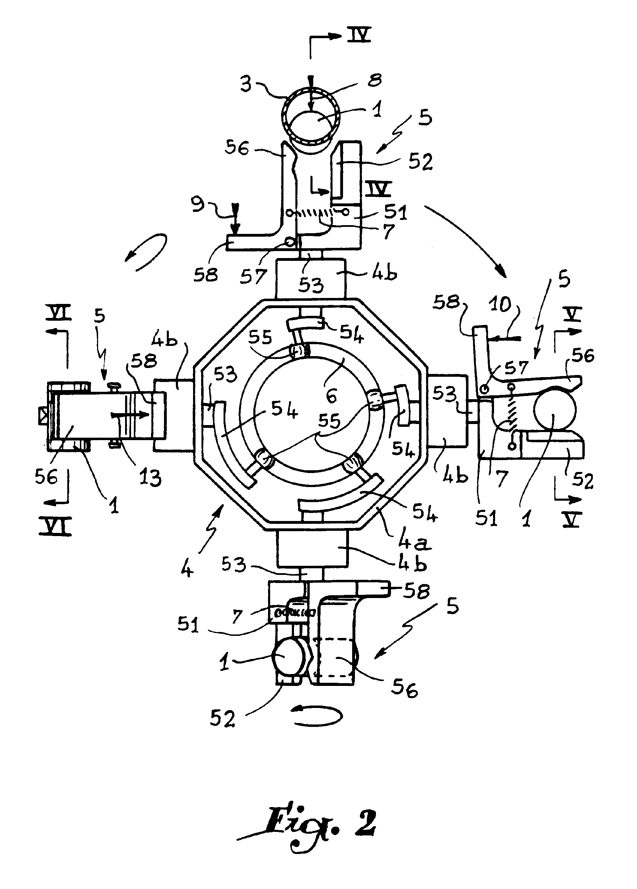

Le mécanisme pour la mise en oeuvre du procédé suivant l'invention, qui a été illustré en fig. 2, comprend essentiellement une goulotte verticale de stockage des bouchons referencée 3 et dont le diamètre intérieur et légèrement plus grand que celui du bouchon 1. Le mécanisme comporte en outre une tourelle 4 pourvue d'un moyeu 4a de forme polygonale supportant quatre pinces 5 susceptibles de saisir successivement les bouchons à leur sortie de la goulotte 3 et de les amener après trois quarts de tour à leur position d'évacuation dans l'orientation désirée.

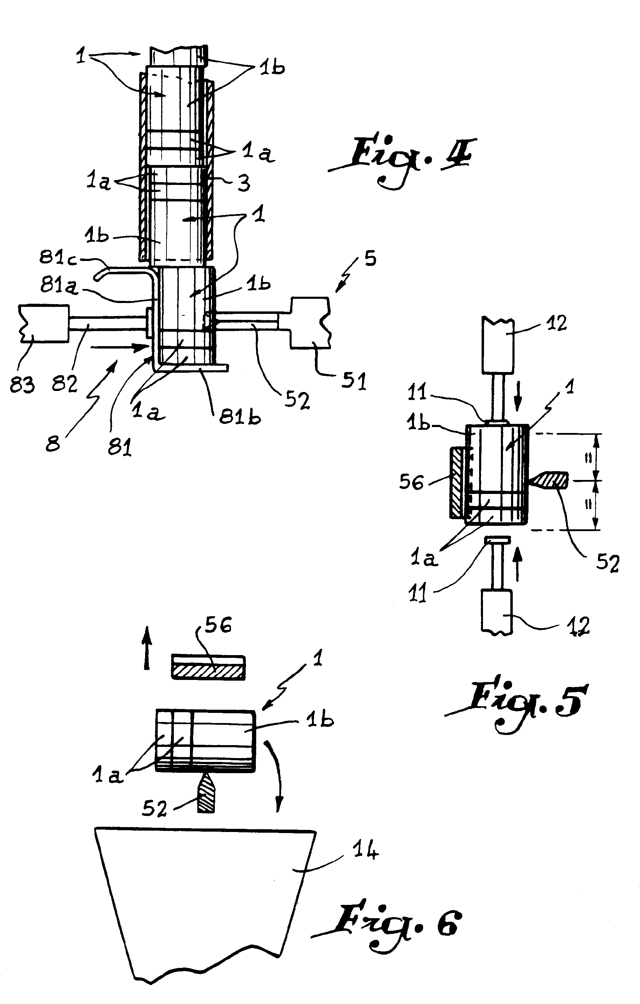

Chaque pince 5 est, comme illustré en fig. 3, composée de deux becs dont l'un 51 constitue une lame ou couteau 52 présentant une arête effilée. Le couteau 52 est solidaire d'un tourillon 53 monté à rotation dans un palier 4b de la tourelle 4 et qui dépasse à l'intérieur de celle-ci qui est formée en réalité par un élément tubulaire. La partie du tourillon 53 dépassant à l'intérieur de la tourelle 4 est assemblée rigidement à l'une des extrémités d'un bras 54 dont l'autre extrémité porte un galet 55 roulant sur une came annulaire fixe 6. L'autre bec de la pince 5 est constitué par un doigt 56 disposé en vis-à-vis du couteau 52 et présentant une largeur notable. Ce doigt est articulé au talon 51 du couteau 52 au moyen d'un axe 57. Un ressort 7 est prévu pour tendre à faire pivoter le doigt 56 en direction du couteau 52. Le doigt 56 comporte encore une queue 58 dont le rôle sera mieux expliqué plus loin.

On a illustré en fig. 4 un sélecteur-chargeur 8 situé à la base de la goulotte 3. Il comprend une palette 81 placée à l'extrémité de la tige du piston 82 d'un vérin 83 électrique ou pneumatique. La palette 81 comprend une paroi verticale 81a à partir de la base de laquelle part une oreille horizontale 81b contre laquelle le premier bouchon situé dans la goulotte vient reposer. La partie haute de la paroi 81a est pourvue d'une patte horizontale 81c qui vient obturer la base de la goulotte lorsque le vérin 83 est actionné pour amener le bouchon entre les becs de la pince 5. A ce moment et comme illustré en fig. 2, une rampe 9 illustrée par une flèche agit sur la queue 58 du doigt 56 pour l'écarter du couteau 52 de manière à pouvoir saisir le bouchon orienté verticalement. La rotation de la tourelle 4 entraîne l'échappement de la rampe 9 et la fermeture de la pince qui maintient fermement le bouchon. Lorsque celle-ci arrive au second poste après un trajet angulaire de 90°, une rampe 10 libère très légèrement la pression du doigt 56 sur le bouchon 1 et deux butées 11 sont déplacées par des vérins 12 de manière à centrer le bouchon 1 par rapport au couteau 52. Bien entendu, des cales réglables non représentées sont prévues afin de déterminer exactement les courses des butées 11 en vue de réaliser le centrage précité. Lorsque la pince quitte la seconde position, elle échappe à la rampe 10 et le doigt 56 vient à nouveau appuyer le bouchon contre le couteau 1. La forme de la came annulaire 6 est telle qu'elle communique au bras 54 un mouvement de rotation entraînant celui de la pince qui effectue ainsi une rotation de 90° avant d'arriver à la quatrième position, c'est-àdire celle obtenue après une rotation de 270° à partir de la goulotte 3. Lorsque la pince arrive à cette position, dans laquelle le bouchon est horizontal avec le couteau 52 situé en dessous de lui, une rampe 13 agit sur la queue 58 du doigt 56 pour dégager celui-ci du bouchon qui vient donc comme illustré en fig. 6, en équilibre instable sur le couteau 52. Du fait que sa partie 1b est plus lourde, il tombe dans une trémie 14 dans le sens désiré, c'est-à-dire sa partie 1b en avant. Que le bouchon se présente dans le sens illustré en fig. 6 ou dans le sens contraire avec la partie 1b à gauche, il tombe toujours avec la partie en question la première dans la trémie 14.

On a ainsi réalisé un mécanisme de positionnement qui permet d'obtenir une distribution dans la trémie 14 à très grande vitesse sans risque d'erreur.

## Revendications

1. Procédé de positionnement dans une orientation déterminée d'articles allongés (1) hétérogènes suivant leur longueur, c'est-à-dire à centre de gravité situé hors de leur plan transversal de symétrie (2), caractérisé en ce qu'il consiste :

    – à présenter les articles (1) successivement dans une orientation verticale ;

    – à saisir un article par sa paroi latérale entre les deux becs (52-56) d'une pince (5) dont l'un (52) est un couteau ;

    – à centrer l'article (1) par rapport au couteau (52) en desserant légèrement la pince (5) ;

    – à faire tourner la pince de manière à amener l'article (1) qu'elle maintient à l'horizontale, le couteau (52) se trouvant en dessous dudit article ;

    – et à ouvrir la pince (5) afin que l'article en équilibre instable sur le couteau tombe verticalement dans une orientation déterminée par son balourd.

2. Mécanisme destiné à la mise en oeuvre du procédé suivant la revendication 1, caractérisé en ce qu'il comprend :

    – une goulotte verticale (3) de stockage des articles (1) ;

    – un sélecteur (8) de l'article (1) se trouvant à la base de la goulotte (3) et constituant également chargeur dudit article (1) dans la pince (5) ;

    – une tourelle (4) pourvue d'une multiplicité de pinces rotatives (5) dont l'un des becs (52) est un couteau ;

– un dispositif de centrage (11-12) de l'article (1) par rapport au couteau (52) de chaque pince (5) ;

– des rampes (9, 10, 13) propres à commander les mouvements du bec (56) de chaque pince (5) ;

– une came annulaire (6) assurant la rotation des pinces (5) ;

– une trémie (14) dans laquelle les articles tombent dans l'orientation désirée ;

– et des moyens de commande synchronisée des différents organes du mécanisme.

3. Mécanisme suivant la revendication 2, caractérisé en ce que le couteau (52) de chaque pince (5) est fixe tandis que son bec opposé ou doigt (56) est articulé par rapport audit couteau (52), ce bec (56) comportant un ressort (7) qui tend à le déplacer vers le couteau (52) ainsi qu'une queue (58) coopérant avec les différentes rampes (9, 10, 13) de commande du mouvement dudit bec ou doigt (56).

4. Mécanisme suivant la revendication 2, caractérisé en ce que le centrage de l'article s'effectue par l'intermédiaire de butées (11) portées par des moyens (12) propres à déplacer celles-ci de manière appropriée audit centrage.

5. Mécanisme suivant la revendication 2, caractérisé en ce que chaque couteau (52) est solidaire d'un bras (54) qui coopère avec la came annulaire (6) lui imprimant le mouvement de rotation désirée.

## Patentansprüche

1. Verfahren, um heterogene, verlängerbare Gegenstände (1) entsprechend ihrer Länge in eine vorbestimmte Richtung zu orientieren, d.h. am Schwerpunkt, der außerhalb ihrer Mittellinie quer zur Längsrichtung (2) liegt.

– führt die Gegenstände (1) sukzessiv in eine Vertikallage ein,

– greift einen Gegenstand durch seine Seitenwand zwischen den beiden Zangenteilen einer Zange (5), wovon eines eine Schneide hat,

– zentriert den Gegenstand (1) an der Schneide (52), indem die Zange (5) leicht gelockert wird,

– läßt die Zange so wenden, daß sie den Gegenstand mitnimmt, den sie horizontal festhält, wobei sich die Schneide (52) unterhalb des besagten Artikels befindet,

– und öffnet die Zange (5), damit der nicht im Gleichgewicht auf der Schneide liegende Gegenstand vertikal in eine durch seinen Schwerpunkt festgelegte Richtung fällt.

2. Vorrichtung bestimmt zur Inbetriebnahme des Verfahrens gemäß Anspruch 1

– eine vertikale Rinne (3) als Magazin der Gegenstände (1)

– Auswähler (8) der Gegenstände (1) befindet sich auf der Grundfläche der Rinne (3) und stellt ebenfalls den Belader des besagten Gegenstandes (1) in der Zange (5) dar

– ein Türmchen (4) versehen mit einer Vielzahl von sich drehenden Zangen (5), wovon ein Zangengreifteil (52) eine Schneide hat

– eine Zentriervorrichtung (11-12) des Gegenstandes (1) hinsichtlich der Schneide (52) jeder Zange (5)

– Winkelstdüke (9, 10,13) dazu da, um die Schnabelbewegungen (56) jeder Zange zu steuern

– eine ringförmige Klinge (6), wodurch die Rotierung der Zangen (5) geschieht.

– ein Trichter (14), durch welchen die Gegenstände in die gewünschte Richtung fallen

– und synchronisierte Steuerungsmittel verschiedener Typen des Mechanismus.

3. Vorrichtung gemäß Anspruch 2 gekennzeichnet dadurch, daß die Schneide (52) jeder Zange(5) festsitzt, während ihr Greifer gegenüber der Klaue (56) sich nach der besagten Schneide (52) richtet; die Klaue (56) hat eine Feder (7), die sie auf die Schneide zu bewegt sowie eine Verlängerung (58), die mit den verschiedenen Steuerrampen (9, 10, 13) entsprechend der Bewegung des besagten Greifers oder Klaue (56 kooperiert.

4. Vorrichtung gemäß Anspruch 2, dadurch gekennzeichnet, daß die Zentrierung des Gegenstandes durch die Widerläger (11) erfolgt, getragen von MItteln (12), die bemessen sind, diese passend auf die besagte Zentrierung zu verschieben.

5. Vorrichtung gemäß Anspruch 2. Jede Schneide (52) ist solidarisch mit dem Arm (54), der wiederum mit der ringförmigen Klinge (6 ) zusammenwirkt, indem sie ihm die gewünschte Drehbewegung aufzwingt.

## Claims

1. Method of positioning, in a specific direction, elongate articles (1) of different lengths, that is to say with their centre of gravity situated outside of their cross-sectional plane of symmetry (2), characterised in that it comprises:

pointing the articles (1) successively in a vertical direction;

gripping an article by its lateral wall between the two projection members (52, 56) of a gripper (5), one of the projection members (52) being a knife edge;

centering the article (1) with respect to the knife edge (52) by slightly releasing the gripper (5);

rotating the gripper so as to bring the article (1), which it is holding, into its horizontal position, the knife edge (52) being situated beneath said article;

and opening the gripper (5) so that the article, in an unstable equilibrium on the knife edge, falls vertically in a direction determined by its imbalance.

2. Mechanism for implementing the method according to claim 1, characterised in that it comprises:

a vertical chute (3) for storing the articles (1);

a selector (8) for the article (1) situated at the base of the chute (3) and being also the means for loading said article (1) into the gripper (5);

a turret-like member (4) provided with a plurality of rotary grippers (5), of which one of the projection members (52) is a knife edge;

a centering means (11, 12) for centering the article (1) with respect to the knife edge (52) of each gripper (5);

ramps (9, 10, 13) suitable for controlling the movements of the projection members (56) of each gripper (5);

an annular cam (6) for ensuring the rotation of the grippers (5);

a hopper (14), into which the articles fall in the desired direction;

and means for the synchronised control of the various component parts of the mechanism.

3. Mechanism according to claim 2, characterised in that the knife edge (52) of each gripper (5) is fixed, whereas its opposite projection member or finger (56) is articulated with respect to said knife edge (52), this projection member (56) comprising a spring (7), which causes it to be displaced towards the knife edge (52), as well as a shank (58), which cooperates with the various ramps (9, 10, 13) for controlling the movement of said projection member or finger (56).

4. Mechanism according to claim 2, characterised in that the centering of the article is effected through the intermediary of stop members (11), which are supported by means (12) adapted to displace them in a manner appropriate to said centering.

5. Mechanism according to claim 2, characterised in that each knife edge (52) is integral with an arm (54), which cooperates with the annular cam (6), thereby imparting to it the desired rotational movement.

Fig.1

Fig.3

*Fig. 2*

*Fig. 4*

*Fig. 5*

*Fig. 6*